# EUROPÄISCHE PATENTANMELDUNG

(11) **EP 3 907 123 A1**
(43) Veröffentlichungstag der Anmeldung: **10.11.2021**
(21) Anmeldenummer: 20173730.1
(22) Anmeldetag: 08.05.2020
(51) Int. Cl.: B62D 25/00, B62D 29/04, B62D 27/02

(54) **VERSTÄRKUNGSELEMENT ZUR VERSTÄRKUNG EINES STRUKTURELEMENTES**

(71) Anmelder: SIKA TECHNOLOGY AG, 6340 Baar (CH)
(72) Erfinder: Meier, Michael, 5443 Niederrohrdorf (CH); Benouali, Hakim, 1170 Watermael-Boitsfort (BE); Souvay, Denis, 67400 Illkirch (FR); Zingraff, Loic, 8057 Zürich (CH)
(74) Vertreter: Sika Patent Attorneys

(57) **Zusammenfassung**

Ein Verstärkungselement zur Verstärkung eines Strukturelementes in einem Kraftfahrzeugs umfasst: Ein Trägerelement, welches durch ein Pultrusionsverfahren hergestellt ist, und welches eine Längsachse hat, welche sich in einem Verwendungszustand im Wesentlichen entlang einer Längsachse des Strukturelementes erstreckt, wobei das Trägerelement mehrere sich in Richtung der Längsachse erstreckende Aussenflächen hat; und einen Klebstoff zur Verbindung des Trägerelementes mit dem Strukturelement; und zumindest eine Wand, welche auf einer Aussenfläche angeordnet ist; wobei der Klebstoff zumindest auf derselben Aussenfläche des Trägerelements angeordnet ist wie die zumindest eine Wand.

## Beschreibung

Die Erfindung betrifft ein Verstärkungselement zur Verstärkung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzung, die zur Korrosion der Bauelemente führen können, abgedichtet werden. Oft ist es auch wünschenswert, solche Hohlräume und somit das Bauelement wesentlich zu verstärken, jedoch das geringe Gewicht beizubehalten. Weiterhin ist es in manchen Fällen auch notwendig, die Hohlräume und somit die Bauelemente zu stabilisieren, um Geräusche, die sonst den Hohlräumen entlang oder durch diese hindurch übertragen werden würden, zu reduzieren.

Insbesondere im Automobilbau, aber auch im Flugzeug- und Bootsbau, werden deshalb unter anderem Verstärkungselemente (englisch: reinforcer) verwendet, um Hohlräume zu verstärken. Ein bekannter Ansatz zur Herstellung solcher Verstärkungselemente besteht darin, dass in einem Zweikomponentenspritzgussverfahren ein Träger gespritzt wird, und dass auf einer Aussenseite dieses Trägers ein expandierbarer Klebstoff als zweite Komponente angespritzt wird. Solche Verstärkungselemente werden in Hohlräume von Strukturelementen eingesetzt, wo dann der Klebstoff unter Hitzeeinwirkung expandiert und dadurch das Trägerelement mit dem Strukturelement verklebt.

Nachteilig an solchen und ähnlichen bekannten Verstärkungselementen bzw. Verfahren zur Herstellung von Verstärkungselementen ist es, dass das Material des Trägers ein limitierendes Element im Gesamtsystem hinsichtlich der mechanischen Stabilität sein kann. Durch das vorgenannte Spritzgussverfahren ist jedoch die Materialauswahl hinsichtlich des Trägermaterials beschränkt, so dass hier nicht beliebig optimiert werden kann hinsichtlich einer mechanischen Stabilität. Gerade in Bereichen von crashrelevanten Strukturen ist jedoch die mechanische Stabilität des Systems von grosser Bedeutung, da für solche Anwendungen eine höchstmögliche mechanische Stabilität wünschenswert ist.

Der Erfindung liegt daher die Aufgabe zugrunde, ein verbessertes Verstärkungselement zur Verfügung zu stellen, welches insbesondere eine verbesserte mechanische Stabilität aufweist. Zudem soll das erfindungsgemässe Verstärkungselement effizient und kostenoptimiert hergestellt werden können.

Diese Aufgabe wird gelöst durch ein Verstärkungselement zur Verstärkung eines Strukturelementes in einem Kraftfahrzeugs, das Verstärkungselement umfassend: Ein Trägerelement, welches durch ein Pultrusionsverfahren hergestellt ist, und welches eine Längsachse hat, welche sich in einem Verwendungszustand im Wesentlichen entlang einer Längsachse des Strukturelementes erstreckt, wobei das Trägerelement mehrere sich in Richtung der Längsachse erstreckende Aussenflächen hat; und einen Klebstoff zur Verbindung des Trägerelementes mit dem Strukturelement; und zumindest eine Wand, welche auf einer Aussenfläche angeordnet ist; wobei der Klebstoff zumindest auf derselben Aussenfläche des Trägerelements angeordnet ist wie die zumindest eine Wand.

Diese Lösung hat zunächst den Vorteil, dass durch das Pultrudieren des Trägerelementes Trägerelemente mit einer verbesserten mechanischen Stabilität hergestellt werden können. Durch den Einsatz von Endlosfasern in Richtung der Längsachse des Trägerelementes können wesentlich stabilere Trägerelemente realisiert werden.

Das Vorsehen von einer solchen Wand bzw. von solchen Wänden bietet weiterhin den Vorteil, dass dadurch der Klebstoff mechanisch geschützt wird, bevor er im Strukturelement angeordnet wird. Beispielsweise wird so die Gefahr verringert, dass der Klebstoff vom Trägerelement abgestreift oder abgeschlagen wird. Weiterhin haben solche Wände den Vorteil, dass bei einer Aktivierung des Klebstoffes der Klebstoff bei einer Expansion geführt werden kann durch die Wand, oder aber, dass er bei nicht expandierbaren Klebstoffen in Form gehalten wird.

Ein weiterer Vorteil ist darin zu sehen, dass durch ein Pultrusionsverfahren im Unterschied zu einem Spritzgussverfahren weniger Investitionskosten in Werkzeuge getätigt werden müssen. So kann beispielsweise eine Produktionsanlage zur Herstellung von Trägerelementen mit verschiedenen Querschnitten genutzt werden, indem lediglich ein Formgebungselement bei der Pultrusion angepasst werden muss. Demgegenüber muss bei dem Spritzgussverfahren jeweils eine neue Spritzgussform für jedes andersartige Trägerelement hergestellt werden, was hohe Investitionskosten zur Folge hat.

Die hier vorgeschlagene Lösung hat zudem den Vorteil, dass dadurch die gesamte Herstellung des Verstärkungselementes in einer ununterbrochenen Produktionslinie gemacht werden kann. Dies führt zu einer Vereinfachung des gesamten Prozesses. Im Idealfall sind keine weiteren Nachbearbeitungsschritte der abgelängten Verstärkungselemente mehr nötig.

In einer beispielhaften Ausführungsform sind der Klebstoff und die Wand in der Nähe voneinander angeordnet.

In einer beispielhaften Ausführungsform sind der Klebstoff und die Wand höchstens 10 mm, bevorzugt höchstens 8 mm, bevorzugt höchstens 6 mm, bevorzugt höchstens 4 mm, bevorzugt höchstens 2 mm voneinander entfernt angeordnet.

In einer beispielhaften Ausführungsform sind der Klebstoff und die Wand angrenzend zueinander angeordnet.

In einer beispielhaften Ausführungsform ist der Klebstoff durch die Wand in zumindest eine Richtung auf der Aussenfläche begrenzt.

In einer beispielhaften Ausführungsform werden beim Pultrudieren des Trägerelementes Endlosfasern verwendet.

In einer beispielhaften Ausführungsform werden Glas- und/oder Karbon- und/oder Aramid- und/oder Naturfasern verwendet.

In einer weiteren beispielhaften Ausführungsform umfasst eine Matrix, welche um die Fasern angeordnet ist, eine Polyamid-Zusammensetzung.

In einer bevorzugten Weiterbildung umfasst die Matrix ein Polyamid 6.

In einer weiteren beispielhaften Weiterbildung umfasst die Matrix ein in-situ polymerisiertes Polyamid.

Als Klebstoff können grundsätzlich verschiedene Klebstoffe eingesetzt werden.

In einer ersten beispielhaften Ausführungsform ist der Klebstoff ein Formgedächtnismaterial.

Solche Formgedächtnismaterialien sind beispielsweise in der Veröffentlichung WO 2019/145503 A1 beschrieben.

Das Verwenden eines Formgedächtnismaterials als Klebstoff hat den Vorteil, dass dadurch eine Anordnung und eine Vorbereitung des Klebstoffes in einer durchgehenden Produktionslinie realisiert werden kann. So kann beispielsweise der auf das Trägerelement aufgebrachte Klebstoff durch eine Pressstation geführt werden, in welcher Rollen den Klebstoff in einen gespannten Zustand überführen.

In einer alternativen Ausführungsform ist der Klebstoff ein nicht-expandierbarer Klebstoff.

In einer beispielhaften Weiterbildung expandiert dieser nicht-expandierbare Klebstoff bei einer Aktivierung um weniger als ± 20%, bevorzugt um weniger als ± 10%, besonders bevorzugt weniger als ± 5%.

Ein beispielhaftes kommerziell erhältliches Material, welches als ein solcher nicht-expandierbarer Klebstoff eingesetzt werden kann, ist unter dem Handelsnamen SikaPower® erhältlich.

In einer weiteren beispielhaften Ausführungsform ist der Klebstoff ein expandierbarer Klebstoff.

In einer beispielhaften Weiterbildung hat der expandierbare Klebstoff eine Expansionsrate zwischen 50 und 800%, bevorzugt zwischen 50 und 500%, besonders bevorzugt zwischen 100 und 400%.

Ein beispielhaftes Material, welches als expandierbarer Klebstoff verwendet werden kann, ist unter dem Handelsnamen SikaReinforcer® erhältlich. Ein alternatives Material, welches als expandierbaren Klebstoff verwendet werden kann, ist unter dem Handelsnamen SikaBaffle® erhältlich.

In einer weiteren beispielhaften Ausführungsform ist der Klebstoff ein nicht expandierbarer Klebstoff, wobei zusätzlich ein expandierbares Material unter dem Klebstoff angeordnet ist.

In einer bevorzugten Weiterbildung wird zunächst das expandierbare Material auf der zumindest einen Aussenfläche des Trägerelementes angeordnet, und danach wird der nicht expandierbare Klebstoff auf dem expandierbaren Material angeordnet. Demnach ist schliesslich das expandierbare Material zwischen dem Trägerelement und dem nicht expandierbaren Klebstoff angeordnet.

Durch eine solche Anordnung kann der nicht expandierbare Klebstoff durch das expandierbare Material bei dessen Aktivierung an das Strukturelement gepresst werden, so dass eine Verbindung zwischen Strukturelement und Trägerelement hergestellt werden kann.

Als expandierbares Material kann beispielsweise ein Material, welches unter dem Handelsnamen SikaBaffle® erhältlich ist, verwendet werden. Als nicht expandierbaren Klebstoff kann beispielsweise wiederum ein Material, welches unter dem Handelsnahmen SikaPower® erhältlich ist, verwendet werden.

In einer beispielhaften Weiterbildung hat das Trägerelement ein anderes Material als die Wand.

In einer beispielhaften Ausführungsform umfasst die Wand Polyamid.

In einer beispielhaften Ausführungsform ist die zumindest eine Wand im Wesentlichen in Richtung der Längsachse ausgerichtet.

Eine solche Ausrichtung der Wand hat den Vorteil, dass dadurch die Wand ebenfalls durch das Pultrusionsverfahren hergestellt werden kann.

In einer beispielhaften Ausführungsform ist die zumindest eine Wand einstückig mit dem Trägerelement ausgebildet ist.

In einer beispielhaften Ausführungsform ist die zumindest eine Wand durch ein Pultrusionsverfahren hergestellt.

In einer beispielhaften Ausführungsform ist die zumindest eine Wand im Wesentlichen quer zur Längsachse ausgerichtet.

In einer beispielhaften Ausführungsform besteht die zumindest eine Wand aus einem anderen Material als das Trägerelement.

In einer beispielhaften Ausführungsform ist die zumindest eine Wand nicht durch ein Pultrusionsverfahren hergestellt.

In einer beispielhaften Ausführungsform hat das Verstärkungselement zumindest zwei Wände, welche im Wesentlichen parallel zueinander angeordnet.

In einer beispielhaften Ausführungsform ist der Klebstoff zwischen den beiden Wänden angeordnet ist.

In einer beispielhaften Ausführungsform ist der Klebstoff durch die beiden Wände begrenzt.

In einer beispielhaften Ausführungsform hat das Verstärkungselement zumindest zwei Paare von jeweils zwei zueinander parallel angeordneten Wänden, wobei die zwei Paare auf unterschiedlichen Aussenflächen des Trägerelementes angeordnet sind.

In einer beispielhaften Ausführungsform sind die parallel zueinander angeordneten Wände zwischen 5 mm und 200 mm, bevorzugt zwischen 10 mm und 150 mm, bevorzugt zwischen 15 mm und 120 mm, bevorzugt zwischen 20 mm und 100 mm voneinander beabstandet.

In einer beispielhaften Ausführungsform hat die zumindest eine Wand eine Höhe zwischen 0.5 mm und 8 mm, bevorzugt zwischen 1 mm und 6 mm, bevorzugt zwischen 2 mm und 4 mm.

In einer beispielhaften Ausführungsform hat die zumindest eine Wand eine Breite zwischen 0.5 mm und 20 mm, bevorzugt zwischen 1 mm und 15 mm, bevorzugt zwischen 2 mm und 15 mm, bevorzugt zwischen 2 mm und 10 mm.

In einer beispielhaften Ausführungsform ist der Klebstoff ein expandierbares Material, wobei die zumindest eine Wand derart relativ zum Klebstoff angeordnet ist, dass die Wand den Klebstoff während einer Expansion in eine Richtung senkrecht zur Aussenfläche des Trägerelementes, auf welcher der Klebstoff angeordnet ist, führt.

In einer beispielhaften Ausführungsform ist der Klebstoff ein nicht-expandierbares Material ist, wobei die zumindest eine Wand derart angeordnet ist, dass der Klebstoff in einem flüssigen Zustand von der Wand in eine vorbestimmte Richtung geführt wird.

In einer beispielhaften Ausführungsform ist die zumindest eine Wand zumindest gleich hoch von der Aussenfläche absteht wie der Klebestoff, sodass der Klebstoff durch die Wand vor mechanischen Einwirkungen geschützt.

In einer beispielhaften Ausführungsform ist die zumindest eine Wand derart dimensioniert und angeordnet, dass die Wand in einem Verwendungszustand des Verstärkungselementes mit dem Strukturelement in Berührung ist, sodass das Verstärkungselement mit Hilfe der Wand in vorbestimmter Weise im Strukturelement positionierbar ist.

Einzelheiten und Vorteile der Erfindung werden im Folgenden anhand von Ausführungsbeispielen und mit Bezug auf schematische Zeichnungen beschrieben. Es zeigen:
- Fig. 1A: eine beispielhafte Darstellung eines Pultrusionsverfahrens;
- Fig. 1B: eine beispielhafte Darstellung weiterer Stationen in einer Pultrusionsproduktionslinie;
- Fig. 1C: eine beispielhafte Darstellung nachgelagerter Stationen;
- Fig. 2: eine beispielhafte Darstellung eines Verstärkungselementes in räumlicher Darstellung;
- Fig. 3A und 3B: beispielhafte Darstellungen von Querschnitten von Verstärkungselementen;
- Fig. 4: beispielhafte Darstellung eines Verstärkungselementes in räumlicher Darstellung; und
- Fig. 5: beispielhafte Darstellung eines Querschnittes eines Verstärkungselementes.

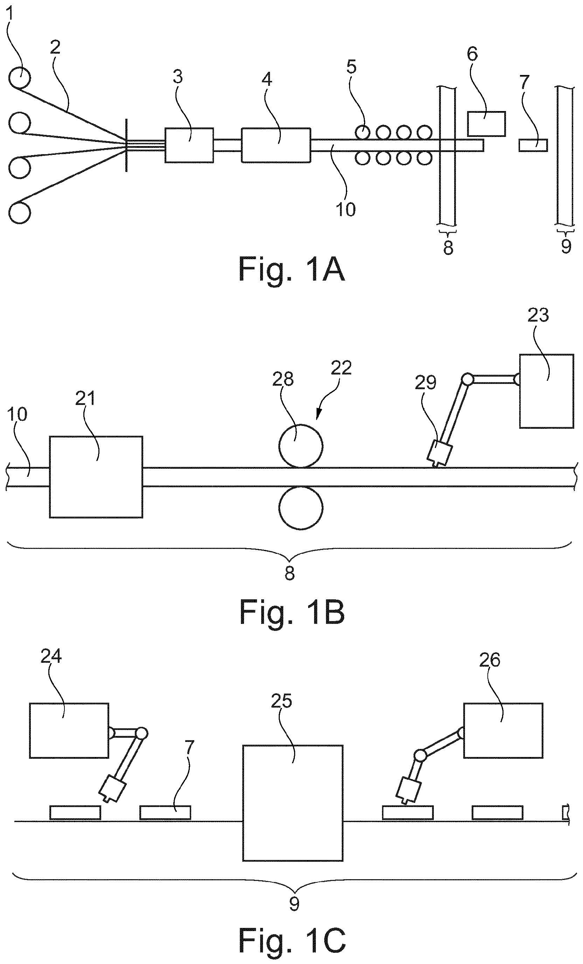

In den Fig. 1A bis 1C ist ein beispielhaftes Verfahren zur Herstellung eines Verstärkungselementes dargestellt. Dabei zeigt die Fig. 1A eine Übersicht über ein solches Verfahren, und die Fig. 1B und 1C zeigen weitere Einzelheiten von Abschnitten in diesem Herstellungsverfahren. Dabei ist in Fig. 1B ein Abschnitt innerhalb der Produktionslinie mit weiteren Stationen schematisch dargestellt, und in Fig. 1C sind nachgelagerte Stationen dargestellt, welche nicht in der primären Produktionslinie des Pultrusionsverfahrens stattfinden.

Gemäss Fig. 1A werden beim Pultrudieren Fasern 2 von Faserspindeln 1 zunächst durch eine Harzwanne 3 geführt. In einem Härtungswerkzeug 4 wird das Profil 10 geformt und gehärtet. Durch ein Ziehwerkzeug 5 wird sichergestellt, dass die Fasern 2 während diesen Prozessschritten geordnet unter Zug stehen. Durch diese Schritte wird demnach ein Profil 10 hergestellt, welches als Ausgangspunkt für das Trägerelement dient. Eine Ablängungsstation 6 unterteilt schliesslich das endlos produzierte Profil 10 in abgelängte Elemente 7.

In der Fig. 1B sind Stationen innerhalb der Produktionslinie schematisch dargestellt, welche im Abschnitt 8 in der Übersicht gemäss Fig. 1A angeordnet sind. Im Ausführungsbeispiel ist zunächst eine Klebstoffapplikationsstation 21 dargestellt. An dieser Station wird ein Klebstoff auf das pultrudierte Profil 10 angeordnet. In diesem Ausführungsbeispiel wird ein Formgedächtnismaterial als Klebstoff verwendet. Weiterhin wird der Klebstoff an einer Pressstation 22 durch Rollen 28 gepresst und in einen gespannten Zustand überführt. Zudem gibt es in diesem Ausführungsbeispiel eine Extrusionsstation 23, von welcher mithilfe einer Düse 29 ein Zusatzelement auf das Profil 10 bzw. das Trägerelement extrudiert werden kann.

In der Fig. 1C sind nachgelagerte Stationen schematisch dargestellt, welche im Abschnitt 9 in der Übersichtsdarstellung gemäss Fig. 1A angeordnet sind. In diesem Ausführungsbeispiel hat es eine erste nachgelagerte Station 24, eine zweite nachgelagerte Station 25 und eine dritte nachgelagerte Station 26. Gemeinsam an diesen nachgelagerten Stationen 24, 25, 26 ist es, dass dabei jeweils immer ein Verfahrensschritt an einem abgelängten Element 7 des pultrudierten Profils 10 ausgeführt wird. Beispielsweise kann an der ersten nachgelagerten Station 24 ein erstes Zusatzelement auf das Trägerelement extrudiert oder überspritzt werden. In der zweiten nachgelagerten Station 25 kann beispielsweise der Klebstoff auf zumindest einer Aussenfläche des Trägerelementes angeordnet werden. Und in der dritten nachgelagerten Station 26 kann beispielsweise ein zweites Zusatzelement auf das Trägerelement und/oder auf das erste Zusatzelement extrudiert oder überspritzt werden.

Um aus dem pultrudierten Profil 10 ein Verstärkungselement herzustellen, kann beispielsweise nur mit Stationen in der Produktionslinie gearbeitet werden, oder aber es kann auch nur mit nachgelagerten Stationen gearbeitet werden, oder aber es kann sowohl mit Stationen in der Produktionslinie als auch mit nachgelagerten Stationen gearbeitet werden.

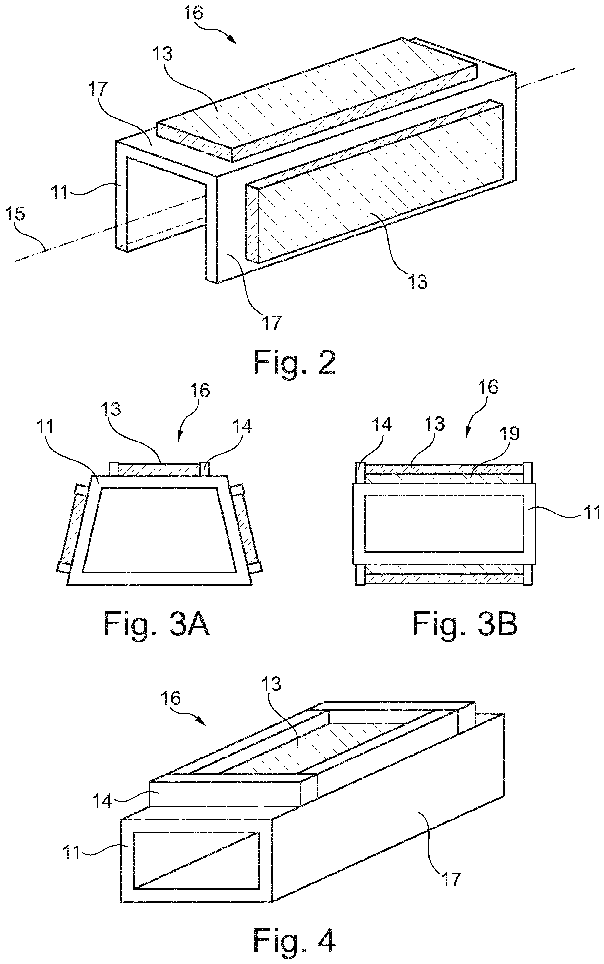

In den Fig. 2 bis 5 sind sodann beispielhaft und schematisch Verstärkungselemente 16 dargestellt, welche durch ein Verfahren gemäss den Fig. 1A bis 1C hergestellt werden können.

In Fig. 2 ist ein nicht-erfindungsgemässes Verstärkungselement 16 schematisch und beispielhaft dargestellt. Das Verstärkungselement 16 hat ein Trägerelement 11, welches eine Längsachse 15 hat. Das Trägerelement 11 hat mehrere sich in Richtung der Längsachse 15 sich erstreckende Aussenflächen 17. Auf diesen Aussenflächen 17 ist ein Klebstoff 13 angeordnet. Dieses Verstärkungselement 16 hat keine Wände.

In den Fig. 3A und 3B sind Querschnitte durch beispielhafte Verstärkungselemente 16 schematisch dargestellt.

In Fig. 3A ist ein Verstärkungselement 16 mit einem trapezoiden Querschnitt dargestellt. Das Trägerelement 11 hat auf drei Aussenflächen jeweils einen Klebstoff 13 angeordnet, welcher von Wänden 14 seitlich abgeschlossen ist. Solche Wände 14 sind deshalb vorteilhaft, weil sie einerseits den Klebstoff 13 vor mechanischen Einflüssen schützen, und andererseits eine Expansion des Klebstoffes 13 oder eine Formstabilität des Klebstoffes 13 bei einer Aktivierung des Klebstoffes 13 gewährleisten können.

In Fig. 3B ist ein weiterer Querschnitt eines weiteren beispielhaften Verstärkungselementes 16 schematisch dargestellt. In diesem Ausführungsbeispiel hat der Träger 11 einen rechteckigen Querschnitt. Auf den beiden breiteren Aussenflächen 17 des Trägerelements 11 ist in diesem Ausführungsbeispiel ein expandierbares Material 19 und ein darauf angeordneter Klebstoff 13 angeordnet. Das expandierbare Material 19 und der Klebstoff 13 sind dabei wiederum von Wänden 14 seitlich abgeschlossen. Bei einer Aktivierung des expandierbaren Materials 19 und des Klebstoffes 13 wird der Klebstoff 13 gegen eine Innenseite des Strukturelementes gedrückt durch die Expansion des expandierbaren Materials 19.

In Fig. 4 ist nun ein Verstärkungselement 16 in einer räumlichen Darstellung schematisch gezeigt. In diesem Ausführungsbeispiel hat das Trägerelement 11 einen rechteckigen Querschnitt. Auf einer Aussenfläche 17 des Trägerelementes 11 ist ein Klebstoff 13 angeordnet. In diesem Ausführungsbeispiel ist der Klebstoff 13 auf allen Seiten durch Wände 14 begrenzt.

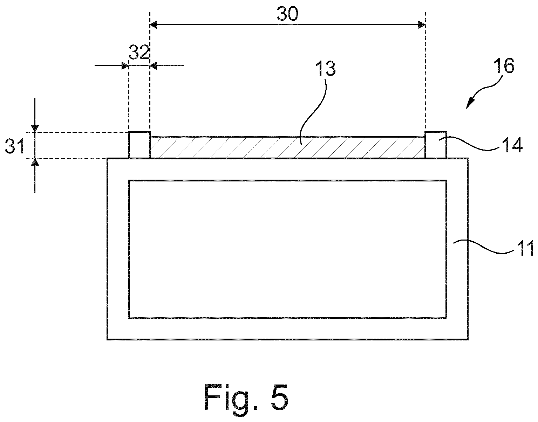

In Fig. 5 ist ein weiterer beispielhafter Querschnitt eines Verstärkungselementes 16 schematisch dargestellt. In diesem Ausführungsbeispiel hat das Trägerelement 11 einen rechteckigen Querschnitt. Auf einer Aussenfläche ist ein Klebstoff 13 angeordnet. Jeweils seitlich von diesem Klebstoff 13 ist eine Wand 14 angeordnet. Diese parallel verlaufenden Wänden 14 sind mit einem Abstand 30 voneinander beabstandet. Weiterhin haben die Wände 14 eine Höhe 31 und eine Breite 32.

### Bezugszeichenliste

- 1: Faserspindel
- 2: Faser
- 3: Harzwanne
- 4: Härtungswerkzeug
- 5: Ziehwerkzeug
- 6: Ablängungsstation
- 7: abgelängtes Element
- 8: Abschnitt mit Stationen in der Produktionslinie
- 9: Abschnitt mit nachgelagerten Stationen
- 10: Endlosprofil
- 11: Trägerelement
- 13: Klebstoff
- 14: Wand
- 15: Längsachse
- 16: Verstärkungselement
- 17: Aussenfläche
- 19: expandierbares Material
- 21: Klebstoffapplikationsstation
- 22: Pressstation
- 23: Extrusionsstation
- 24: erste nachgelagerte Station
- 25: zweite nachgelagerte Station
- 26: dritte nachgelagerte Station
- 28: Rolle
- 29: Düse
- 30: Abstand zwischen Wänden
- 31: Höhe der Wand
- 32: Breite der Wand

## Patentansprüche

1. Verstärkungselement zur Verstärkung eines Strukturelementes in einem Kraftfahrzeug, das Verstärkungselement (16) umfassend:
Ein Trägerelement (11), welches durch ein Pultrusionsverfahren hergestellt ist, und welches eine Längsachse (15) hat, welche sich in einem Verwendungszustand im Wesentlichen entlang einer Längsachse des Strukturelementes erstreckt, wobei das Trägerelement (11) mehrere sich in Richtung der Längsachse (15) erstreckende Aussenflächen (17) hat; und
Einen Klebstoff (13) zur Verbindung des Trägerelementes (11) mit dem Strukturelement; und
Zumindest eine Wand (14), welche auf einer Aussenfläche (17) angeordnet ist;
wobei der Klebstoff (13) zumindest auf derselben Aussenfläche (17) des Trägerelements (11) angeordnet ist wie die zumindest eine Wand (14).

2. Verstärkungselement nach Anspruch 1, wobei die zumindest eine Wand (14) im Wesentlichen in Richtung der Längsachse (15) ausgerichtet ist.

3. Verstärkungselement nach Anspruch 2, wobei die zumindest eine Wand (14) einstückig mit dem Trägerelement (11) ausgebildet ist, und/oder wobei die zumindest eine Wand (14) durch ein Pultrusionsverfahren hergestellt ist.

4. Verstärkungselement nach Anspruch 1, wobei die zumindest eine Wand (14) im Wesentlichen quer zur Längsachse (15) ausgerichtet ist.

5. Verstärkungselement nach Anspruch 4, wobei die zumindest eine Wand (14) aus einem anderen Material als das Trägerelement (11) besteht und/oder wobei die zumindest eine Wand (14) nicht durch ein Pultrusionsverfahren hergestellt ist.

6. Verstärkungselement nach einem der vorhergehenden Ansprüche, wobei das Verstärkungselement (16) zumindest zwei Wände (14) hat, welche im Wesentlichen parallel zueinander angeordnet sind.

7. Verstärkungselement nach Anspruch 6, wobei der Klebstoff (13) zwischen den beiden Wänden (14) angeordnet ist und/oder wobei der Klebstoff (13) durch die beiden Wände (14) begrenzt ist.

8. Verstärkungselement nach einem der vorhergehenden Ansprüche, wobei das Verstärkungselement (16) zumindest zwei Paare von jeweils zwei zueinander parallel angeordneten Wänden (14) hat, wobei die zwei Paare auf unterschiedlichen Aussenflächen (17) des Trägerelementes (11) angeordnet sind.

9. Verstärkungselement nach einem der Ansprüche 6 bis 8, wobei die parallel zueinander angeordneten Wände (14) zwischen 5 mm und 200 mm voneinander beabstandet sind.

10. Verstärkungselement nach einem der vorhergehenden Ansprüche, wobei die zumindest eine Wand (14) eine Höhe (31) zwischen 0.5 mm und 8 mm hat.

11. Verstärkungselement nach einem der vorhergehenden Ansprüche, wobei die zumindest eine Wand (14) eine Breite (32) zwischen 0.5 mm und 20 mm hat.

12. Verstärkungselement nach einem der vorhergehenden Ansprüche, wobei der Klebstoff (13) ein expandierbares Material ist, und wobei die zumindest eine Wand (14) derart relativ zum Klebstoff (13) angeordnet ist, dass die Wand (14) den Klebstoff (13) während einer Expansion in eine Richtung senkrecht zur Aussenfläche (17) des Trägerelementes (11), auf welcher der Klebstoff (13) angeordnet ist, führt.

13. Verstärkungselement nach einem der Ansprüche 1 bis 11, wobei der Klebstoff (13) ein nicht-expandierbares Material ist, und wobei die zumindest eine Wand (14) derart angeordnet ist, dass der Klebstoff (13) in einem flüssigen Zustand von der Wand (14) in eine vorbestimmte Richtung geführt wird.

14. Verstärkungselement nach einem der vorhergehenden Ansprüche, wobei die zumindest eine Wand (14) zumindest gleich hoch von der Aussenfläche (17) absteht wie der Klebestoff (13), sodass der Klebstoff (13) durch die Wand (14) vor mechanischen Einwirkungen geschützt ist.

15. Verstärkungselement nach einem der vorhergehenden Ansprüche, wobei die zumindest eine Wand (14) derart dimensioniert und angeordnet ist, dass die Wand (14) in einem Verwendungszustand des Verstärkungselementes (16) mit dem Strukturelement in Berührung ist, sodass das Verstärkungselement (16) mit Hilfe der Wand (14) in vorbestimmter Weise im Strukturelement positionierbar ist.
